# EUROPEAN PATENT APPLICATION

(11) **EP 4 593 235 A1**
(43) Date of publication of application: **30.07.2025**
(21) Application number: 24153953.5
(22) Date of filing: 25.01.2024
(51) Int. Cl.: H02J 7/00, H02M 7/483, H02M 1/32

(54) **ENERGY STORAGE SYSTEM INTERNAL CELL PROTECTION**

(71) Applicant: Hitachi Energy Ltd, 8050 Zürich (CH)
(72) Inventor: Dijkhuizen, Frans, 726 31 Skultuna (SE); Alves, Roberto, 722 14 Västerås (SE)
(74) Representative: AWA Sweden AB

(57) **Abstract**

The present application relates to a cell (12) for arrangement in an arm of series connected and/or series- and parallel connected cells of an energy storage system (ESS), wherein said cell comprises: a bypass switch (BPS) arranged between a first cell connection terminal (CC1) and a second cell connection terminal (CC2); a string of energy storage modules comprising a first energy storage module (ESM1) and at least a second energy storage module (ESM2, ESM3) connected in series, wherein the first energy storage module (ESM1) is arranged in a first energy storage module position (esp1) and the at least second energy storage module (ESM2, ESM3) is arranged in a corresponding at least second energy storage module position (esp2, esp3), a decoupling capacitor (Cd) arranged in parallel with the string of energy storage modules; and one or more protection switches (PSW1, PSW2, PSW3, PSW4) operable to disconnect at least one energy storage module (ESM1). The present application also relates to a method of controlling such a cell (12), a control unit (13), and an energy storage system (ESS) comprising one or more such cells (12).

## Description

### Technical Field

The present application is directed to the field of power system support. More specifically, the present disclosure relates to a cell for an energy storage system, a method of controlling a cell, a control unit, and an energy storage system comprising one or more cells.

### Background

High Voltage Direct Current, HVDC, transmission systems are used to transfer electric power in an efficient manner. HVDC systems relies on HVDC converters for converting electric power from high voltage alternating current, HVAC, to HVDC or vice versa.

Existing power systems have been operating robustly and reliably mainly due to most power plants being based on traditional synchronous generators which provide energy buffers due to their natural mechanical mass, i.e., inertia. However, as the interest in renewable energy is increasing many of the traditional power plants will be replaced by renewable energy sources, such as, for example, wind and solar power. Renewable energy sources mainly use power electronic converters to transmit generated energy into the power systems, unlike traditional power plants. Power electronic converters have different characteristics in comparison to traditional synchronous generators. Thus, as more and more traditional power plants are replaced by renewable energy sources, the impact due to the different characteristics of renewable energy sources will affect the power systems. The impact will result in significant challenges with regards to maintaining the stability of the power systems and recovery following faults and/or disturbances within the power systems. The natural capabilities which were traditionally provided by synchronous generator, thereby contributing to stability within the power systems, will have to be provided by other means in the future.

WO202225814A1 discloses an Energy Storage System (ESS) including a cell string of serialized half bridge semiconductor cells or power electronics building blocks (PEBBs), where each cell is connected to an energy storage element such as Super Capacitors, Super Batteries or Batteries. A dc chopper formed by the PEBBs in series with the ESS is connected to the DC link of the HVDC system. The ESS includes a dc chopper breaking resistor in the cell string that can be bypassed by a mechanical switch gear device. One problem of protecting a super battery or battery is that these storage elements cannot be short circuited nor discharged via a discharge resistor due to the high amount of energy involved.

In the light of the above, there is a need for power system support which can increase the stability of the power systems.

### Summary

It is an object of the present disclosure to provide an improved solution that alleviates the mentioned drawbacks with present solutions. Furthermore, a first object of the disclosure is to provide a cell for arrangement in an arm of series connected and/or series- and parallel connected cells of an energy storage system which allows for a two-step protection scheme using one or more protection switches and a bypass switch to disconnect energy storage modules in a cell in a safe way and bypassing the cell for continued energy storage system operation. This first object is solved by the invention according to claim 1. A second object of the disclosure is to provide a method of controlling such a cell. The second object is solved by the invention according to claim 11. A third object of the disclosure is to provide a control unit for controlling a cell according to said method. The third object is solved by the invention according to claim 14. A fourth object of the disclosure is to provide an energy storage system comprising such a cell. The fourth object is solved by the invention according to claim 15. Additional advantages are achieved by the preferred embodiments listed in the claims and the embodiments listed in the following.

According to a first aspect, a cell for arrangement in an arm of series connected and/or series- and parallel connected cells of an energy storage system is provided. The cell comprises: a first cell connection terminal and a second cell connection terminal. The cell is adapted with half-bridge assembly or full-bridge assembly defining one or more upper switch positions, one or more lower switch positions, and one or more energy storage module positions. The cell further comprises: a first switch arranged in a first upper switch position; a first diode connected in anti-parallel with the first switch; a second switch arranged in a first lower switch position; a second diode connected in anti-parallel with the second switch; a bypass switch arranged between the first cell connection terminal and the second cell connection terminal. The cell further comprises: a string of energy storage modules comprising a first energy storage module and at least a second energy storage module connected in series, wherein the first energy storage module position and the at least second energy storage module is arranged in a corresponding at least second energy storage module position. The cell further comprises: a decoupling capacitor arranged in parallel with the string of energy storage modules; one or more protection switches operable to disconnect at least one energy storage module.

By the above cell, a two-step protection scheme is enabled which is advantageous for enabling short-circuiting or discharging energy storage modules storing very high amounts of energy, such as super batteries, which otherwise cannot be short-circuited or discharged due to the high amount of energy involved. In the first step, the one or more protection switches are operated to disconnect at least one energy storage module detected to be experiencing a malfunctioning. If the cell can continue to operate even when said at least one energy storage module detected to be experiencing a malfunctioning is disconnected, the cell may be operated to continue operate at a reduced cell voltage. If the cell cannot continue to operate when said at least one energy storage module detected to be experiencing a malfunctioning is disconnected, the cell is bypassed by means of a bypass switch. By this cell configuration, a malfunctioning energy storage module can be disconnected before the cell is bypassed, thereby preventing the energy from the disconnected energy storage module to be discharged in the form of a very high discharge current.

The string of energy storage modules may comprise two energy storage modules or more than two energy storage modules, such as three energy storage modules or any number more than three energy storage modules. Preferably, each energy storage module in the string of energy storage modules is adapted with the same nominal energy storage capacity, but the invention is not limited thereby. Any energy storage module may be adapted with for any energy storage capacity. Preferably, the energy storage modules in the string of energy storage modules are adapted for storing very high amounts of energy. A cell incorporating one or more strings of energy storage modules will typically be adapted for storing energy on the order of 1 MWh or more but the invention is however not limited to such energy storing capacity. An energy storage system in accordance with the invention herein disclosed can be adapted with a storage capacity of less than 1 MWh or more than 1 MWh.

An energy storage system incorporating one or more strings of energy storage modules may as an example be adapted with an energy storage capacity of 100 kWh, 1 MWh, 10 MWh, 100 MWh, 1 000 MWh or 10 000 MWh or more, or with an energy storage capacity within an interval formed by any of above values. The energy storage capacity may depend on the number of strings of energy storage modules incorporated, the number of energy storage modules in each string, and/or the configuration of each energy storage module. The strings of energy storage modules may be adapted with identical designs in terms of number of energy storage modules and/or configuration thereof but the invention is however not limited as such. One or more strings may be adapted with different designs in terms of energy storage capacity. Generally, a string may incorporate fewer or more energy storage modules to achieve a desired energy storage capacity. In case of fewer energy storage modules, each energy storage module may be designed to store more energy for a string to be able to have a desired energy storage capacity. In case of more energy storage modules in a string, one or more energy storage modules may be designed to store less energy for a string to be able to have a desired energy storage capacity. The amount of energy each energy storage module is adapted to store may depend on configuration of the energy storage modules and how many energy storage modules are present in the string of energy storage modules. Configuration of an energy storage module may e.g. include functions of the energy storage module, number of energy storage cells incorporated, and how the cells are connected to one another.

An energy storage module may be a device for storing energy. The energy storage may comprise one or more energy storage units. In case of a plurality of energy storage units, they may be arranged in series- and/or parallel. An energy storage unit may be any suitable energy storage units, for instance a capacitor unit or supercapacitor unit. An energy storage module may be adapted with a configuration of one or more energy storage units to provide an energy storage capacity. The value of energy storage capacity may be appropriately provided depending on which energy storage unit or energy storage units are used, the number thereof, and whether they are connected in series- and/or parallel. The energy storage module may be a battery or a super battery. The energy storage module may incorporate one or more batteries. The energy storage module may incorporate one or more super batteries.

A super battery may be defined as an energy storage unit comprising one or more supercapacitors. A super battery may include a stack of supercapacitors. In the context of this application, a cell herein referred may be a part of a super battery (e.g., a string of energy storage modules may be a super battery), be a super battery, or comprise one or more super batteries. Supercapacitors may also be referred to as ultracapacitors. A supercapacitor may typically store 10 to 100 times more energy per unit volume or mass than electrolytic capacitors. Moreover, a supercapacitor may enable delivery of charge much faster than electrolytic batteries. Moreover, supercapacitors may be adapted to tolerate many more charge and discharge cycles. As such, super batteries may advantageously be implemented in energy storage systems.

As an example, a nominal cell voltage of a cell may be 3 kV DC. The invention is however not limited as such, but may be adapted with other levels of nominal cell voltages.

Moreover, while the invention is referred to as a cell, it should not be construed to mean a cell of a battery, i.e., only a capacitive element. Rather, the cell herein disclosed includes e.g., switches and a string of energy storage modules and should therefore rather be viewed of as an energy storage device. As an alternative, the cell may be referred to as an energy storage device.

The decoupling capacitor is preferably of a capacitor type including electrolytic capacitors for nominal cell voltage or other standard capacitors for high voltage DC applications. The decoupling capacitor may include one or more capacitor units. A plurality of capacitor units may be connected in series and/or in parallel to achieve a voltage and/or capacitance required depending on application.

The one or more protection switches may be operable in response to a control signal. The control signal may be generated by a control unit in response to a detected malfunction of a first energy storage module. The control unit may be adapted with means for monitoring malfunctions of any energy storage module in the string of energy storage modules or adapted for receiving information indicating any of the energy storage modules in the string of energy storage modules is experiencing a malfunction.

According to one embodiment, the cell comprises a first protection switch for disconnecting the first energy storage module, a second protection switch for disconnecting the second energy storage module, and a third protection switch for disconnecting a third energy storage module. By this, the cell enables configuration wherein each energy storage module can be individually disconnected. The cell may comprise a protection switch for each energy storage module of the string of energy storage modules to allow for individual disconnection thereof.

According to one embodiment, the cell comprises a fourth protection switch arranged between the second cell connection terminal and the string of energy storage modules. By this, the entire string of energy storage modules may be disconnected.

According to one embodiment, the cell comprises a first bypass switch for bypassing the first energy storage module. By this, the first energy storage module may be bypassed.

According to one embodiment, the cell comprises a second bypass switch for bypassing the second energy storage module and a third bypass switch for bypassing a third energy storage module. By this, the second energy storage module and the third energy storage module may be bypassed. The cell may comprise a bypass switch for each energy storage module of the string of energy storage modules to allow for individual bypassing thereof.

According to one embodiment, the cell comprises one or more diodes arranged in parallel with one or more protection switches and one or more diodes arranged in parallel with one or more bypass switches. By these diodes, the cell enables current flow past said switches when in an open state.

According to one embodiment, one or more energy storage modules comprises one or more energy storage units. Any energy storage module of the string of energy storage modules may comprise a suitable number of energy storage units for achieving a preferable energy storage capacity. For instance, any energy storage module of the string of energy storage modules may comprise one large energy storage unit of a first energy storage capacity or a plurality of smaller energy storage units of a second energy storage capacity which when cooperating together provides the first energy storage capacity.

According to one embodiment, one or more energy storage modules comprise two or more energy storage units connected in series. Any energy storage module of the string of energy storage modules may comprise any plurality of energy storage units, for instance two, three, four, five, six, seven, eight, nine, ten, or more. The energy storage units of any energy storage module may be similar in design so as to provide the same energy storage capacity. Alternatively, any energy storage units of any energy storage module may be different in design so as to provide different energy storage capacities.

According to one embodiment, one or more protection switches are normally closed pyrotechnical switches and/or one or more bypass switches are normally open pyrotechnical switches. The first protection switch may be a normally closed pyrotechnical switch. The second protection switch may be a normally closed pyrotechnical switch. The third protection switch may be a normally closed pyrotechnical switch. The fourth protection switch may be a normally closed pyrotechnical switch. Any further protection switch of a cell comprising a string of energy storage modules with more than three energy storage modules may be a normally closed pyrotechnical switch. The first bypass switch may be a normally open pyrotechnical switches. The second bypass switch may be a normally open pyrotechnical switches. The third bypass switch may be a normally open pyrotechnical switches. The fourth bypass switch may be a normally open pyrotechnical switches. Any further bypass switch of a cell comprising a string of energy storage modules with more than three energy storage modules may be a normally open pyrotechnical switch.

According to one embodiment, the first switch and/or the second switch are semiconductor power devices, such as transistors of turn-off type such as IGBT or IGBT. The cell may however be adapted with other types of semiconductor power devices. Other semiconductor power devices may as an example include MOSFET or SiC devices. The cell may however be adapted with still other types of semiconductor power devices.

According to a second aspect, a method of controlling a cell according to the first aspect or any embodiments thereof is provided. The method comprises: upon detection of a malfunctioning of a first energy storage module, operating one or more protection switches to disconnect the first energy storage module, and if the cell can still operate when one or more energy storage modules is/are disconnected, operating the cell with reduced cell voltage, and optionally, if the cell cannot operate when said one or more energy storage modules is/are disconnected, closing the bypass switch.

By the above method, a two-step protection scheme is enabled which is advantageous for enabling short-circuiting or discharging energy storage modules storing very high amounts of energy, such as super batteries, which otherwise cannot be short-circuited or discharged due to the high amount of energy involved. In the first step, the one or more protection switches are operated to disconnect at least one energy storage module detected to be experiencing a malfunctioning. If the cell can continue to operate even when said at least one energy storage module detected to be experiencing a malfunctioning is disconnected, the cell may be operated to continue operate at a reduced cell voltage. If the cell cannot continue to operate when said at least one energy storage module detected to be experiencing a malfunctioning is disconnected, the cell can is bypassed by means of a bypass switch. By this method, a malfunctioning energy storage module can be disconnected before the cell is bypassed, thereby preventing the energy from the disconnected energy storage module to be discharged in the form of a very high discharge current.

According to one embodiment, the method comprises: upon detection of a malfunctioning of a second energy storage module, operating one or more protection switches to disconnect the second energy storage module. By this, the cell may operate at a further reduced cell voltage.

According to one embodiment, the method comprises: upon detection of a malfunctioning of a third energy storage module, operating one or more protection switches to disconnect the third energy storage module. By this, the cell may operate at a further reduced cell voltage.

The method may be used to enable a cell to be configured into one or more operation modes, each of which associated by a respective cell voltage. The number of modes *m* may depend on the number of energy storage modules n in the cell which can be individually disconnected and/or bypassed. For certain cell configurations, the number of modes *m* may depend on the number of energy storage modules n as *m* = *2ⁿ.* For instance, in the case of *n* = 3, the number of modes *m* may be 8, wherein in a first mode m1, all of the three energy storage modules are operational by which the cell operates at a 100% cell voltage, wherein in a second mode m2, a first energy storage module is disconnected and/or bypassed while the second energy storage module and the third energy storage module are operational by which the cell operates at a ~67% cell voltage, and wherein in a third mode m3, the second energy storage module is disconnected and/or bypassed while the first energy storage module and the third energy storage module are operational by which the cell operates at a ~67% cell voltage, etc..

According to a third aspect of the disclosure, a control unit comprising means for performing the method according to the second aspect or any embodiments thereof is provided. Said means may comprise a processing unit for processing information based on operation of the one or more energy storage modules of the string of energy storage modules. The one or more energy storage modules of the string of energy storage modules may be monitored by means of a battery management system. The control unit may be adapted to receive information about the one or more energy storage modules of the string of energy storage modules via the battery management system. The control unit may comprise a memory for storing instructions of how to control the first switch, the second switch, any protection switches, and/or any bypass switches. The control unit may generate a first gate control signal for controlling the first switch. The control unit may generate a second gate control signal for controlling the second switch. The control unit may comprise a delay trigger unit. The control unit may comprise a bypass triggering unit. The delay trigger unit and the bypass triggering unit may cooperate so as to ensure that a bypass switch is closed after any energy storage module has been disconnected or bypassed.

According to a fourth aspect of the disclosure, an energy storage system comprising one arm or more arms of series connected and/or series- and parallel connected cells including one or more cells according to the first aspect or any embodiments thereof is provided. The energy storage system may be configured for connection to a DC-DC converter. A DC-DC converter may comprise the energy storage system. The DC-DC converter may comprise a dc chopper breaking resistor. The DC-DC converter may comprise a mechanical switch gear device.

According to a fifth aspect of the invention, a computer program is provided. The computer program comprises instructions which, when the program is executed by a computer, cause the computer to carry out the method according to the second aspect or any embodiments thereof.

By computer, it may be meant any device capable of accepting and processing information for some result based on a program, software, or sequence of instructions on how the information is to be processed. The information may be in the form of digitalized data. As non-limiting examples, a computer may be a server, a stationary computing device, a portable computing device.

According to a sixth aspect, a computer-readable medium is provided. The computer readable medium comprises instructions which, when executed by a computer, cause the computer to carry out the method according to the second aspect or any embodiments thereof. The computer-readable medium may be any suitable medium for comprising instructions. The computer-readable medium may be a computer-readable storage medium.

Effects and features of the various additional aspects are largely analogous to those described above in connection with the first aspect. Embodiments mentioned in relation to the first aspect are largely compatible with the various additional aspects. It is further noted that the inventive concepts relate to all possible combinations of features unless explicitly stated otherwise.

The invention is defined by the appended independent claims, with embodiments being set forth in the appended dependent claims, in the following description and in the drawings.

### Brief Description of the Drawings

The invention will in the following be described in more detail with reference to the enclosed drawings, wherein:
Fig. 1a shows an energy storage system comprising a plurality of cells according to one embodiment of the disclosure;
Fig. 1b shows an energy storage system comprising a plurality of cells according to one embodiment of the disclosure when said energy storage system is connected to a DC line, preferably near a converter;
Fig. 2 shows a cell according to one embodiment of the disclosure;
Fig. 3 shows a cell according to one embodiment of the disclosure;
Fig. 4 shows a cell according to one embodiment of the disclosure;
Fig. 5 shows a cell according to one embodiment of the disclosure and a control unit for controlling the cell;
Fig. 6 shows a method according to one embodiment of the disclosure;
Fig. 7 shows an energy storage system comprising a plurality of cells according to one embodiment of the disclosure when said energy storage system is connected to a converter and a control unit for controlling the cells of the energy storage system.

### Description of Embodiments

Hereinafter, the principle and spirit of the present disclosure will be described with reference to the illustrative embodiments. It should be understood that all these embodiments are given merely for the person skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The disclosed subject matter will now be described with reference to the attached figures. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

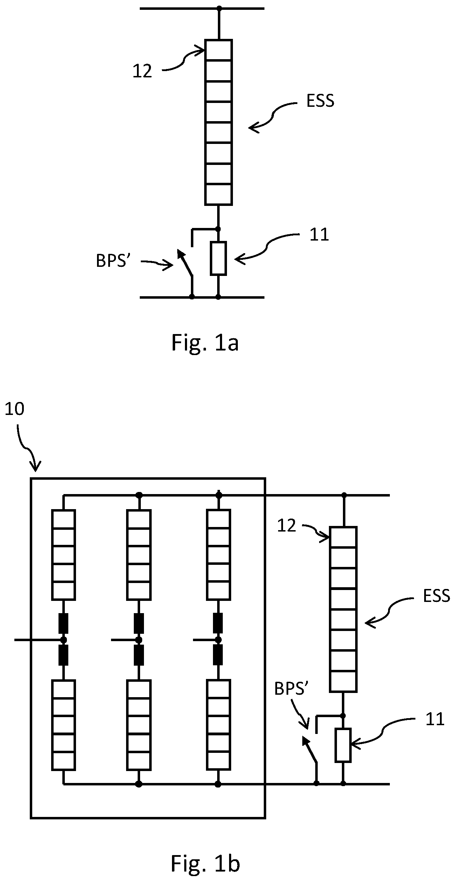

Fig. 1a shows an energy storage system ESS comprising a plurality of cells 12 according to one embodiment of the disclosure. The cells 12 are arranged in an arm as a plurality of series connected cells 12. The cells 12 may however be arranged in an arm as a plurality of series- and parallel connected cells 12. The arm of the ESS may further comprising a bypass switch BPS' in parallel with a resistor 11.

Fig. 1b shows an energy storage system ESS comprising a plurality of cells 12 according to one embodiment of the disclosure. The cells 12 are arranged in an arm as a plurality of series connected cells 12. The cells 12 may however be arranged in an arm as a plurality of series- and parallel connected cells 12. The arm of the ESS may further comprising a bypass switch BPS' in parallel with a resistor 11. The energy storage system ESS is attached to a DC line, preferably near a converter 10.

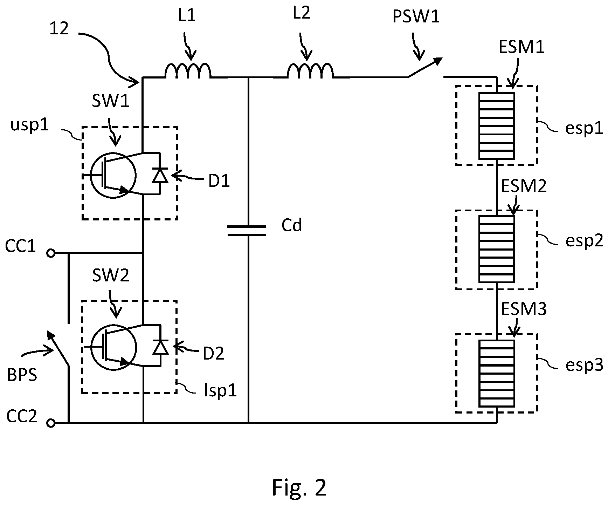

Fig. 2 shows a cell 12 according to one embodiment of the disclosure. The cell 12 comprises a first cell connection terminal CC1. The cell 12 comprises a second cell connection terminal CC2. The cell 12 is adapted with half-bridge assembly defining an upper switch position usp1 and a lower switch position Isp1 and three energy storage module positions esp1, esp2, esp3. The cell 12 further comprises a first switch SW1 arranged in the upper switch position usp1; a first diode D1 connected in anti-parallel with the first switch SW1. The cell 12 further comprises a second switch SW2 arranged in the lower switch position Isp1 and a second diode D2 connected in anti-parallel with the second switch SW2. The cell 12 further comprises a bypass switch BPS arranged between the first cell connection terminal CC1 and the second connection terminal CC2. The cell 12 further comprises a string of energy storage modules comprising: a first energy storage module ESM1 arranged in the first energy storage module position esp1, a second energy storage module ESM2 arranged in the second energy storage module position esp2, and a third energy storage module ESM3 arranged in the third energy storage module position esp3. The cell 12 further comprises a decoupling capacitor Cd arranged in parallel with the string of energy storage modules. The purpose of the decoupling capacitor Cd is to counteract inductive effects arising during operation of the cell, which can be modelled as a first inductor L1 and a second inductor L2 as shown in Fig. 2. As such, the cell 12 is thereby not limited to include a first inductor L1 and a second inductor L2 as shown in Fig. 2, any such first inductor L1 and second inductor L2 are optional. The cell 12 further comprises a first protection switch PSW1 arranged in series with the string of energy storage modules. The first switch SW1 is a semiconductor power device, such as an IGBT. The second switch SW2 is a semiconductor power device, such as an IGBT. The first protection switch PSW1 is a normally closed pyrotechnical switch.

The first energy storage module ESM1 is illustrated as comprising eight energy storage units connected in series. The first energy storage module ESM1 may however be adapted with a different energy storage unit configuration. For instance, the first energy storage module ESM1 may comprise any plurality of energy storage units connected in series and/or in parallel.

The second energy storage module ESM2 is illustrated as comprising eight energy storage units connected in series. The second energy storage module ESM2 may however be adapted with a different energy storage unit configuration. For instance, the second energy storage module ESM2 may comprise any plurality of energy storage units connected in series and/or in parallel.

The third energy storage module ESM3 is illustrated as comprising eight energy storage units connected in series. The third energy storage module ESM3 may however be adapted with a different energy storage unit configuration. For instance, the third energy storage module ESM3 may comprise any plurality of energy storage units connected in series and/or in parallel.

The cell 12 enables a two-step protection scheme involving a first step of opening the first protection switch PSW1, which disconnects the entire string of energy storage modules, and a second step of closing the bypass switch BPS. Thereby, a discharge current is prevented from being discharged in a sudden manner when bypassing the cell 12.

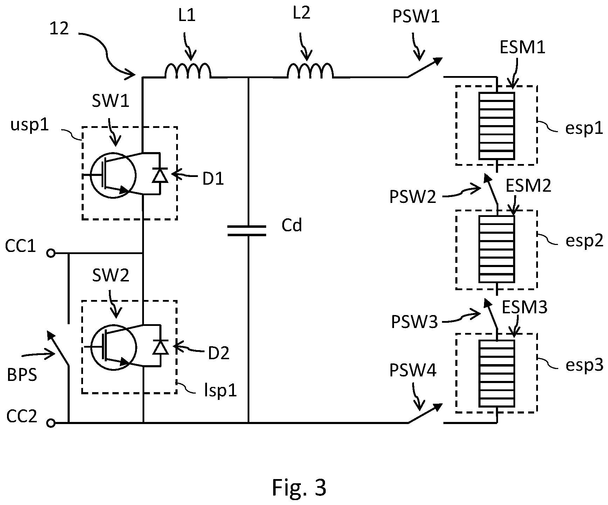

Fig. 3 shows a cell 12 according to one embodiment of the disclosure, which further builds on the cell 12 discussed in relation to Fig. 2. The cell 12 is further adapted so that each energy storage module ESM1, ESM2, ESM3 is provided with a respective protection switch PSW1, PSW2, PSW3. A fourth protection switch PSW4 is arranged between the second cell connection terminal CC2 and the string of energy storage modules ESM1, ESM2, ESM3. The second protection switch PSW2 is a normally closed pyrotechnical switch. The third protection switch PSW3 is a normally closed pyrotechnical switch. The fourth protection switch PSW4 is a normally closed pyrotechnical switch.

Thereby, the string of energy storage modules ESM1, ESM2, ESM3 may be disconnected using protection switches closest to a malfunctioning energy storage module before bypassing the cell 12 by closing the bypass switch BPS. Moreover, it also enables disconnecting the entire string of energy storage modules ESM1, ESM2, ESM3, before bypassing the cell 12 by closing the bypass switch BPS.

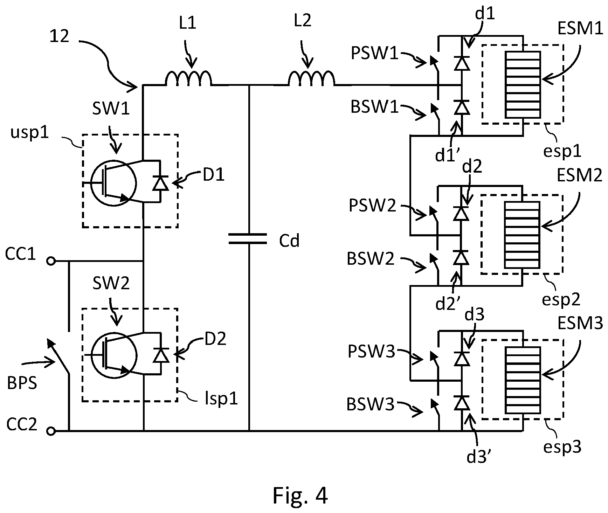

Fig. 4 shows a cell 12 according to one embodiment of the disclosure, which further builds on the cell 12 discussed in relation to Fig. 2. The cell 12 comprises a first bypass switch BSW1 arranged for bypassing the first energy storage module ESM1, a second bypass switch BSW2 for bypassing the second energy storage module ESM2, and a third bypass switch BSW3 for bypassing the third energy storage module ESM3. The first bypass switch BSW1 is a normally open pyrotechnical switch. The second bypass switch BSW2 is a normally open pyrotechnical switch. The third bypass switch BSW3 is a normally open pyrotechnical switch.

The first protection switch PSW1 is arranged for disconnecting the first energy storage module ESM1 of the string of energy storage modules ESM1, ESM2, ESM3. The cell 12 further comprises a second protection switch PSW2 arranged for disconnecting the second energy storage module ESM2 of the string of energy storage modules ESM1, ESM2, ESM3. The cell 12 further comprises a third protection switch PSW3 arranged for disconnecting the third energy storage module ESM3 of the string of energy storage modules ESM1, ESM2, ESM3. The first protection switch PSW1 is a normally closed pyrotechnical switch. The second protection switch PSW2 is a normally closed pyrotechnical switch. The third protection switch PSW3 is a normally closed pyrotechnical switch.

The cell 12 further comprises a first set comprising a first diode d1, a second diode d2, and a third diode d3 wherein the first diode d1 is arranged in parallel with the first protection switch PSW1, the second diode d2 is arranged in parallel with the second protection switch PSW2 and the third diode d3 is arranged in parallel with the third protection switch PSW3.

The cell 12 further comprises a second set comprising a first diode d1', a second diode d2', and a third diode d3' wherein the first diode d1' is arranged in parallel with the first bypass switch BSW1, the second diode d2' is arranged in parallel with the second bypass switch BSW2, and the third diode d3' is arranged in parallel with the third bypass switch BSW3.

The cell 12 thereby allows for any of the energy storage modules ESM1, ESM2, ESM3 to be individually disconnected or bypassed. In the event of a malfunction which impacts performance of any of the first energy storage module ESM1, the second energy storage module ESM2, and the third energy storage module ESM3, one or more energy storage modules ESM1, ESM2, ESM3, may be bypassed. When bypassing one or more energy storage modules ESM1, ESM2, ESM3, said one or more energy storage modules ESM1, ESM2, ESM3 are first disconnected by operation of the one or more protective switches PSW1, PSW2, PSW3 into an open state, after which the one or more bypass switches BSW1, BSW2, BSW3 are operated into a closed state. Thereby, the cell 12 can be controlled to assume one of a plurality of operational modes m1-m8 which are illustrated in table 1. The cell voltage is based represented as a percentage of nominal operational voltage when all energy storage modules are operational. An energy storage module being listed as ON/OFF is in an operational state in which it contributes to a cell voltage, i.e., it is not bypassed.

**Table 1: Various operational modes of the cell according to one embodiment of the disclosure**

| **Mode** | **ESM1** | **ESM2** | **ESM3** | **Cell voltage** |
|---|---|---|---|---|
| m1 | ON | ON | ON | 100% |
| m2 | OFF | ON | ON | ∼67% |
| m3 | ON | OFF | ON | ∼67% |
| m4 | ON | ON | OFF | ∼67% |
| m5 | OFF | OFF | ON | ∼33% |
| m6 | OFF | ON | OFF | ∼33% |
| m7 | ON | OFF | OFF | ∼33% |
| m8 | OFF | OFF | OFF | 0% |

In a first mode m1, the first energy storage module ESM1, the second energy storage module ESM2 and the third energy storage module ESM3 are in an ON state, i.e., fully operational and contributing to the overall cell voltage. As a result, the cell 12 operates at a level of 100% of nominal cell voltage.

In a second mode m2, the first energy storage module ESM1 is in an OFF state, i.e. bypassed and no longer contributing to the overall cell voltage, whereas the second energy storage module ESM2 and the third energy storage module ESM3 are in an ON state. As a result, the cell 12 operates at a level of -67% of nominal cell voltage.

In a third mode m3, the first energy storage module ESM1 and the third energy storage module ESM3 are in an ON state whereas the second energy storage module ESM2 is in an OFF state. As a result, the cell 12 operates at a level of -67% of nominal cell voltage.

In a fourth mode m4, the first energy storage module ESM1 and the second energy storage module ESM2 are in an ON state whereas the third energy storage module ESM3 is in an OFF state. As a result, the cell 12 operates at a level of -67% of nominal cell voltage.

In a fifth mode m5, the first energy storage module ESM1 and the second energy storage module ESM2 are in an OFF state whereas the third energy storage module ESM3 is in an ON state. As a result, the cell 12 operates at a level of ~33% of nominal cell voltage.

In a sixth mode m6, the first energy storage module ESM1 and the third energy storage module ESM3 are in an OFF state whereas the second energy storage module ESM2 is in an ON state. As a result, the cell 12 operates at a level of ~33% of nominal cell voltage.

In a seventh mode m7, the first energy storage module ESM1 is in an ON state whereas the second energy storage module ESM2 and the third energy storage module ESM3 are in an OFF state. As a result, the cell 12 operates at a level of ~33% of nominal cell voltage.

In an eight mode m8, the first energy storage module ESM1, the second energy storage module ESM2 and the third energy storage module ESM3 are in an OFF state. As a result, the cell 12 operates at a level of 0% of nominal cell voltage. The cell 12 may then also be fully bypassed by operation of the bypass switch BPS.

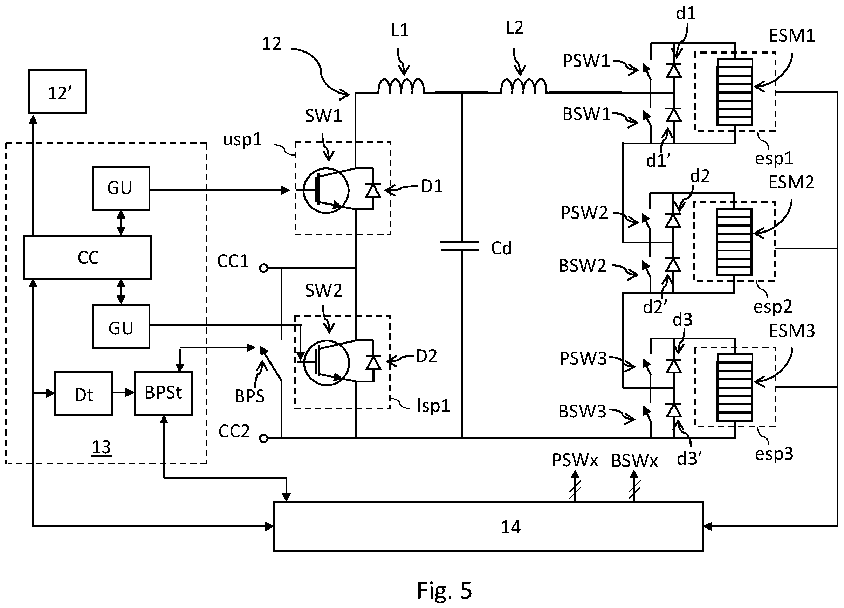

Fig. 5 shows a cell 12 according to one embodiment of the disclosure and a control unit 13 for controlling the cell 12. The cell 12 is adapted as the embodiment disclosed in relation to Fig. 4. However, the operation of the first energy storage module ESM1, the second energy storage module ESM2, and the third energy storage module ESM3 are monitored by means of an energy storage module management system 14. When the energy storage module management system 14 detects that one or more of the energy storage modules of the cell 12 is experiencing a malfunction, then the energy storage module management system 14 sends a control signal to a relevant pair of protection switch PSWx and bypass switch BPSx for controlling the state of the malfunctioning energy storage module. The energy storage module manage system 14 communicates with a control unit 13 for establishing a time delay by means of a time delay module to add a time delay to bypass triggering of the bypass switch BPSx via a bypass switch triggering module PBSt. The control unit 13 may further control operation of the first switch SW1 and/or the second switch SW2 via gate control units GU should the need require for specific control thereof. The control unit 13 can be further adapted to control other cell 12' in the event of a malfunction is detected there or based on the malfunctioning of the current cell 12.

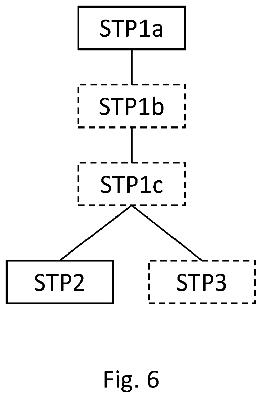

Fig. 6 shows a method according to one embodiment of the disclosure for controlling a cell 12. The method comprises: upon detection of a malfunctioning of a first energy storage module ESM1, ESM2, ESM3, operating STP1a one or more protection switches PSW1-PSW4 to disconnect the first energy storage module ESM1, ESM2, ESM3, and if the cell 12 can still operate when one or more energy storage modules ESM1, ESM2, ESM3 is/are disconnected, operating STP2 the cell 12 with reduced cell voltage, and if the cell 12 cannot operate when said one or more energy storage modules ESM1, ESM2, ESM3 is/are disconnected, closing STP3 the bypass switch BPS, BSW1, BSW2, BSW3.

The method may optionally comprise: upon detection of a malfunctioning of a second energy storage module ESM1, ESM2, ESM3, operating STP1b one or more protection switches PSW1-PSW4 to disconnect the second energy storage module ESM1, ESM2, ESM3.

The method may optionally comprise: upon detection of a malfunctioning of a third energy storage module ESM1, ESM2, ESM3, operating STP1c one or more protection switches PSW1-PSW4 to disconnect the third energy storage module ESM1, ESM2, ESM3.

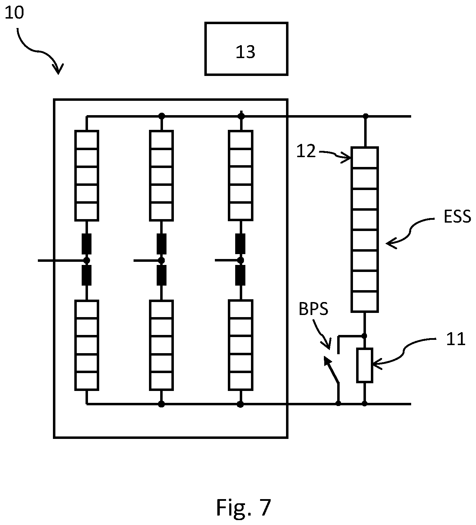

Fig. 7 shows an energy storage system ESS comprising a plurality of cells 12 according to one embodiment of the disclosure when said energy storage system ESS is connected to a converter 10 and a control unit 13 for controlling the cells of the energy storage system. One or more of the cells 12 may be adapted as any of the embodiments of cells 12 disclosed in reference to any of Figs. 2, 3, 4, 5. The control unit 13 may be adapted as the control unit 13 discussed in reference to Fig. 5.

In the detailed description, the invention e.g., relating to a cell 12 and method of controlling said cell 12, has been exemplified in reference to a cell 12 comprising three energy storage modules ESM1, ESM2, ESM3, each of which adapted with eight serially connected energy storage units. However, the invention is not limited to such a configuration, but can be adapted with any plurality of energy storage units, arranged in series or series- and parallel configurations. Further, the invention is not limited to energy storage modules comprising eight energy storage units; rather the energy storage modules may comprise any number of energy storage units in any suitable series- or series- and parallel configuration. Moreover, the invention is not limited to energy storage modules having the same number of energy storage units; rather, such an example case has herein been assumed to exemplify the invention in a clear manner. Moreover, the cell 12 can incorporate additional protection switches and/or bypass switches for controlling operation of additional energy storage modules.

While the foregoing is directed to embodiments of the disclosure, other and further embodiments may be devised without parting from the inventive concept discussed herein. The scope of the invention is however determined by the claims.

## Claims

1. Cell (12) for arrangement in an arm of series connected and/or series- and parallel connected cells of an energy storage system (ESS), the cell (12) comprising:
a first cell connection terminal (CC1);
a second cell connection terminal (CC2);
the cell (12) adapted with half-bridge assembly or full-bridge assembly defining one or more upper switch positions (usp1), one or more lower switch positions (lsp1), and one or more energy storage module positions (esp1, esp2, esp3),
the cell (12) further comprising:
a first switch (SW1) arranged in a first upper switch position (usp1);
a first diode (D1) connected in anti-parallel with the first switch (SW1);
a second switch (SW2) arranged in a first lower switch position (lsp1);
a second diode (D2) connected in anti-parallel with the second switch (SW2);
a bypass switch (BPS) arranged between the first cell connection terminal (CC1) and the second cell connection terminal (CC2);
a string of energy storage modules comprising a first energy storage module (ESM1) and at least a second energy storage module (ESM2, ESM3) connected in series, wherein the first energy storage module (ESM1) is arranged in a first energy storage module position (esp1) and the at least second energy storage module (ESM2, ESM3) is arranged in a corresponding at least second energy storage module position (esp2, esp3),
a decoupling capacitor (Cd) arranged in parallel with the string of energy storage modules;
one or more protection switches (PSW1, PSW2, PSW3, PSW4) operable to disconnect at least one energy storage module (ESM1).

2. The cell (12) according to claim 1, comprising a second protection switch (PSW2) for disconnecting the second energy storage module (ESM2), and a third protection switch (PSW3) for disconnecting a third energy storage module (ESM3).

3. The cell (12) according to claim 3, comprising a fourth protection switch (PSW4) arranged between the second cell connection terminal (CC2) and the string of energy storage modules.

4. The cell (12) according to any of claims 1-3, comprising a first bypass switch (BSW1) for bypassing the first energy storage module (ESM1).

5. The cell (12) according to claim 4, comprising a second bypass switch (BSW2) for bypassing the second energy storage module (ESM2) and a third bypass switch (BSW3) for bypassing a third energy storage module (ESM3).

6. The cell (12) according to any preceding claims, comprising one or more diodes (d1, d2, d3) arranged in parallel with one or more protection switches (PSW1, PSW2, PSW3) and one or more diodes (d1', d2', d3') arranged in parallel with one or more bypass switches (BSW1, BSW2, BSW3).

7. The cell (12) according to any preceding claims, wherein one or more energy storage modules (ESM1, ESM2, ESM3) comprises one or more energy storage units.

8. The cell (12) according to any preceding claims, wherein one or more energy storage modules (ESM1, ESM2, ESM3) comprises two or more energy storage units connected in series.

9. The cell (12) according to any preceding claims, wherein one or more protection switches (PSW1, PSW2, PSW3) are normally closed pyrotechnical switches and/or one or more bypass switches (BSW1, BSW2, BSW3) are normally open pyrotechnical switches.

10. The cell (12) according to any preceding claims, wherein the first switch (SW1) and/or the second switch (SW2) are semiconductor power devices, such as transistors of turn-off type such as IGBT or BIGT.

11. Method of controlling a cell according to any of claims 1-10, comprising:
upon detection of a malfunctioning of a first energy storage module (ESM1, ESM2, ESM3),
operating (STP1a) one or more protection switches (PSW1-PSW4) to disconnect the first energy storage module (ESM1, ESM2, ESM3), and
if the cell (12) can still operate when one or more energy storage modules (ESM1, ESM2, ESM3) is/are disconnected, operating (STP2) the cell (12) with reduced cell voltage, and
if the cell (12) cannot operate when said one or more energy storage modules (ESM1, ESM2, ESM3) is/are disconnected, closing (STP3) the bypass switch (BPS, BSW1, BSW2, BSW3).

12. Method according to claim 11, comprising:
upon detection of a malfunctioning of a second energy storage module (ESM1, ESM2, ESM3),
operating (STP1b) one or more protection switches (PSW1-PSW4) to disconnect the second energy storage module (ESM1, ESM2, ESM3).

13. Method according to any of claims 11-12, comprising:
upon detection of a malfunctioning of a third energy storage module (ESM1, ESM2, ESM3),
operating (STP1c) one or more protection switches (PSW1-PSW4) to disconnect the third energy storage module (ESM1, ESM2, ESM3).

14. Control unit (13) comprising means for performing the method according to any of claims 11-13.

15. An energy storage system (ESS) comprising one arm or more arms of series connected and/or series- and parallel connected cells including one or more cells (12) according to any of claims 1-10.
